(19) Europäisches Patentamt
European Patent Office
Office européen des brevets

(11) EP 4 749 693 A1

(12) **EUROPEAN PATENT APPLICATION**

(43) Date of publication:
**27.05.2026 Bulletin 2026/22**

(21) Application number: **25215030.5**

(22) Date of filing: **11.11.2025**

(51) International Patent Classification (IPC):
***H01M 4/04*** $^{(2006.01)}$ ***H01M 4/131*** $^{(2010.01)}$
***H01M 4/62*** $^{(2006.01)}$ ***H01M 10/0525*** $^{(2010.01)}$

(52) Cooperative Patent Classification (CPC):
**H01M 4/622; H01M 4/0404; H01M 4/131; H01M 10/0525;** H01M 4/134; H01M 4/386; H01M 4/525; H01M 2004/028

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **13.11.2024 KR 20240161011**

(71) Applicant: **SAMSUNG SDI CO., LTD.**
**Yongin-si, Gyeonggi-do 17084 (KR)**

(72) Inventors:
- **LEE, Hyunseop**
**Yongin-si, Gyeonggi-do 17084 (KR)**
- **CHOI, Jewon**
**Yongin-si, Gyeonggi-do 17084 (KR)**
- **KIM, Eunji**
**Yongin-si, Gyeonggi-do 17084 (KR)**

(74) Representative: **Maiwald GmbH**
**Elisenhof**
**Elisenstraße 3**
**80335 München (DE)**

(54) **POSITIVE ELECTRODE FOR RECHARGEABLE LITHIUM BATTERY AND RECHARGEABLE LITHIUM BATTERY INCLUDING THE SAME**

(57) Provided are a positive electrode for a rechargeable lithium battery and a rechargeable lithium battery including the positive electrode. The positive electrode includes a positive electrode active material layer, and the positive electrode active material layer includes a positive electrode active material, a conductive material, an acrylic binder, and a polyimide binder. The acrylic binder is a copolymer containing a styrene unit and an acrylate unit.

FIG. 1

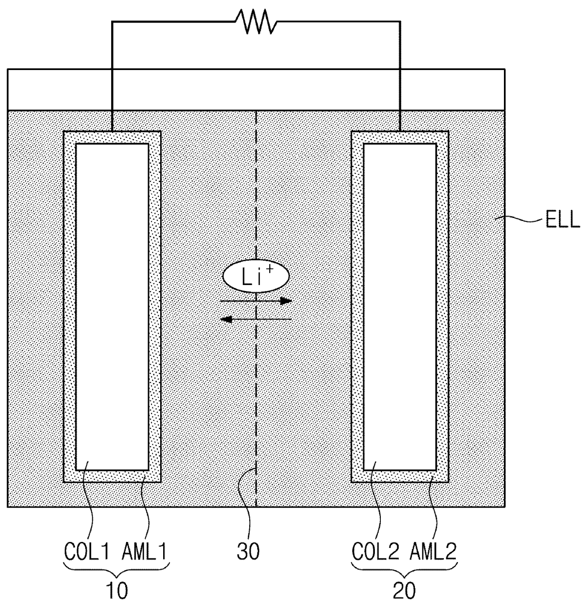


EP 4 749 693 A1

## Description

### BACKGROUND

The present disclosure relates to a positive electrode for a rechargeable lithium battery, and a rechargeable lithium battery including the positive electrode.

The increasing presence of battery-powered electronics, such as, e.g., mobile phones, laptop computers, electric vehicles, and the like, has driven a rise in demand for rechargeable batteries having high energy density and high capacity. Accordingly, improving the performance of rechargeable lithium batteries may be advantageous.

Rechargeable lithium batteries include a positive electrode and a negative electrode, each of the positive electrode and the negative electrode including an active material that allows intercalation and deintercalation of lithium ions, and an electrolyte solution, and produce electrical energy from redox reactions that take place as lithium ions are intercalated into or deintercalated from the positive electrode and the negative electrode.

### SUMMARY

The present disclosure describes a positive electrode for a rechargeable lithium battery, exhibiting improved press density and adhesive strength.

The present disclosure also describes a rechargeable lithium battery exhibiting improved lifespan characteristics.

An example embodiment of the present disclosure includes a positive electrode for a rechargeable lithium battery, including a positive electrode active material layer.

The positive electrode active material layer includes a positive electrode active material, a conductive material, an acrylic binder, and a polyimide binder, and the acrylic binder is or includes a copolymer containing a styrene unit and an acrylate unit.

In an example embodiment of the present disclosure, a rechargeable lithium battery includes the positive electrode described above, a negative electrode including a negative electrode active material, and an electrolyte solution.

### BRIEF DESCRIPTION OF THE FIGURES

The accompanying drawings are included to provide a further understanding of the present disclosure, and are incorporated in and constitute a part of this specification. The drawings illustrate example embodiments of the present disclosure and, together with the description, serve to explain principles of the present disclosure. In the drawings:

FIG. 1 is a simplified conceptual view showing a rechargeable lithium battery according to example embodiments of the present disclosure;

FIGS. 2 to 5 are schematic views showing a rechargeable lithium battery according to example embodiments of the present disclosure, and FIG. 2 shows a cylindrical battery, FIG. 3 shows a prismatic battery, and FIGS. 4 and 5 show pouch-type batteries;

FIG. 6 is a cross-sectional view for describing a positive electrode plate according to example embodiments of the present disclosure;

FIG. 7 is a graph for evaluating an interfacial resistance of positive electrodes manufactured according to Examples 1 and 2, and Comparative Example 1 of the present disclosure; and

FIG. 8 is a graph for evaluating lifespan characteristics of rechargeable lithium batteries manufactured according to Examples 1 and 2, and Comparative Example 1.

### DETAILED DESCRIPTION

In order to sufficiently understand the configuration and effects of the present disclosure, example embodiments of the present disclosure are described with reference to the accompanying drawings. It should be noted, however, that the present disclosure is not limited to the following example embodiments, and may be implemented in various forms and variously modified. The example embodiments herein are provided so that this disclosure is thorough and complete and fully conveys the scope of the present disclosure to those skilled in the art.

Herein, it is understood that when a component is referred to as being "on" another component, the component may be directly on another component, or an intervening third component may be present therebetween. In addition, in the drawings, thicknesses of components may be exaggerated for effectively describing technical contents. Like reference numerals refer to like elements throughout.

The example embodiments described herein are explained with reference to the cross-sectional views and/or

plan views as ideal example views of the present disclosure. In the drawing, the thicknesses of films and regions may be exaggerated for effective description of the technical contents. Thus, regions presented as an example in the drawings have general properties, and shapes of the exemplified areas are used to illustrate a specific shape of a device region. Therefore, this should not be construed as limiting the scope of the present disclosure. Although the terms such as first, second, and third are used to describe various components in various example embodiments herein, the components should not be limited to these terms. These terms are used only to distinguish one component from another component. Embodiments described and exemplified herein include complementary embodiments thereof.

Terms used herein are not for limiting the present disclosure but for describing the example embodiments. As used herein, the singular forms include the plural forms as well, unless the context clearly indicates otherwise. The meaning of 'comprises' and/or 'comprising' used herein does not exclude the presence or addition of one or more other components besides a mentioned component.

As used herein, the term "combination thereof" may refer to a mixture, a stack, a composite, a copolymer, an alloy, a blend, or a reaction product.

Unless otherwise defined herein, a particle diameter may be an average particle diameter. In addition, a particle diameter is defined as an average particle diameter (D50) indicating the diameter of particles at a cumulative volume of about 50 vol% in particle size distribution. The average particle diameter (D50) may be measured by a method widely known to those skilled in the art, for example, by a particle size analyzer, an image of transmission electron microscope (TEM), or an image of scanning electron microscope (SEM). Alternatively, the average particle diameter (D50) may be measured by a measurement device using dynamic lightscattering, wherein data analysis is conducted to count the number of particles for each particle size range, and an average particle diameter (D50) value may then be obtained through calculation. Alternatively, the average particle diameter (D50) may be measured using, e.g., a laser diffraction method. In the measuring using the laser diffraction method, for example, target particles are dispersed in a dispersion medium, introduced into a commercially available laser diffraction particle diameter measuring device (e.g., MT 3000 available from Microtrac, Ltd.), irradiated with ultrasonic waves of about 28 kHz at a power of 60 W, and then an average particle diameter (D50) based on 50% of the particle diameter distribution in the measuring device may be calculated.

When the terms "about" or "substantially" are used in this specification in connection with a numerical value, it is intended that the associated numerical value include a tolerance of $\pm$10% around the stated numerical value. When ranges are specified, the range includes all values therebetween such as increments of 0.1%.

FIG. 1 is a simplified conceptual view showing a rechargeable lithium battery according to example embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be disposed between the positive electrode 10 and the negative electrode 20. The positive electrode 10, the negative electrode 20, and the separator 30 may be in contact with the electrolyte solution ELL. The positive electrode 10, the negative electrode 20, and the separator 30 may be impregnated in the electrolyte solution ELL.

The electrolyte solution ELL may be or include a medium configured to transfer lithium ions between the positive electrode 10 and the negative electrode 20. In the electrolyte solution ELL, the lithium ions may move through the separator 30 toward the positive electrode 10 or toward the negative electrode 20.

## Positive Electrode 10

The positive electrode 10 for a rechargeable lithium battery may include a positive electrode current collector COL1, and a positive electrode active material layer AML1 on the positive electrode current collector COL1. The positive electrode active material layer AML1 may include a positive electrode active material, and may further include a binder and/or a conductive material.

In an example embodiment, the positive electrode 10 may further include an additive that may constitute a sacrificial positive electrode.

For example, the positive electrode active material layer AML1 may contain about 90 wt% to about 99.5 wt% of the positive electrode active material or about 90 wt% to about 99 wt% of the positive electrode active material, with respect to 100 wt% of the positive electrode active material layer AML1. With respect to 100 wt% of the positive electrode active material layer AML1, the binder and the conductive material may each amount to a range of from about 0.1 wt% to about 5 wt% or from about 0.5 wt% to about 5 wt%.

The binder may attach the positive electrode active material particles to each other, and attach the positive electrode active material to the positive electrode current collector COL1.

The conductive material may impart conductivity to the electrode. Any material that does not cause undesirable chemical changes, and that is an electron conductive material, may be usable in batteries. Examples of the conductive material may include a carbon-based material such as at least one of natural graphite, artificial graphite, carbon black, acetylene black, ketjen black, a carbon fiber, a carbon nanofiber, and a carbon nanotube; a metal-based material including

at least one of copper, nickel, aluminum, silver, and the like in a form of a metal powder or a metal fiber; a conductive polymer such as a polyphenylene derivative; or a mixture thereof.

Al may be used as the positive electrode current collector COL1, but the example embodiment of the present disclosure is not limited thereto.

The positive electrode 10 according to example embodiments of the present disclosure is described below through FIG. 6.

## Positive Electrode Active Material

A compound capable of reversibly intercalating and deintercalating lithium (lithiated intercalation compound) may be used as a positive electrode active material in a positive electrode active material layer AML1. For example, at least one of a composite oxide of lithium and a metal such as or including at least one of cobalt, manganese, nickel, aluminum, and a combination thereof may be used.

The composite oxide may be or include a lithium transition metal composite oxide, and examples thereof include at least one of lithium nickel-based oxide, lithium cobalt-based oxide, lithium manganese-based oxide, lithium iron phosphate-based compound, cobalt-free nickel-manganese-based oxide, or a combination thereof.

For example, the positive electrode active material may be or include a high nickel-based positive electrode active material having a nickel content of about 80 mol% or greater, about 85 mol% or greater, about 90 mol% or greater, about 91 mol% or greater, or about 94 mol% or greater, with respect to 100 mol% of metals excluding lithium from the lithium transition metal composite oxide. The high nickel-based positive electrode active material may achieve high capacity, and may thus be applicable to high-capacity, high-density rechargeable lithium batteries.

For example, the positive electrode active material may include a lithium composite oxide represented by Formula 1 below.

Formula 1: $Li_xM^1_yM^2_zM^3_{1-y-z}O_{2-a}X_a$

x, a, y, and z may satisfy $0.5 \leq x \leq 1.8$, $0 \leq a \leq 0.05$, $0 < y \leq 1$, $0 \leq z \leq 1$, and $0 < y+z \leq 1$.

$M^1$, $M^2$, and $M^3$ may each independently include at least one element such as or including at least one of nickel (Ni), cobalt (Co), manganese (Mn), aluminum (Al), boron (B), barium (Ba), calcium (Ca), cerium (Ce), chromium (Cr), iron (Fe), molybdenum (Mo), niobium (Nb), silicon (Si), strontium (Sr), magnesium (Mg), titanium (Ti), vanadium (V), tungsten (W), zirconium (Zr), and lanthanum (La), and a combination thereof.

X may include at least one element such as or including at least one of fluorine (F), sulfur (S), phosphorus (P), or chlorine (Cl).

For example, the positive electrode active material may include lithium cobalt oxide ($LiCoO_2$). For example, the positive electrode active material may include an NCA-based positive electrode active material formed of or including at least one of Ni, Co, or Al.

## Negative Electrode 20

The negative electrode 20 for a rechargeable lithium battery may include a negative electrode current collector COL2 and a negative electrode active material layer AML2 on the negative electrode current collector COL2. The negative electrode active material layer AML2 may include a negative electrode active material, and may further include a negative electrode binder and/or a conductive material.

The negative electrode current collector COL2 may include at least one of a copper foil, a nickel foil, a stainless steel foil, a titanium foil, a nickel foam, a copper foam, a polymer substrate coated with a conductive metal, or a combination thereof.

The negative electrode binder may attach the negative electrode active material particles to each other, and also attach the negative electrode active material to the negative electrode current collector COL2. The negative electrode binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinyl pyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is included as the negative electrode binder, a cellulose-based compound capable of

imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoridehexafluoropropylene copolymer, polyethylene oxide, or a combination thereof.

The conductive material may impart conductivity to the electrode. Any material that does not cause undesirable chemical changes, and that is an electron conductive material, may be usable in batteries. Examples of the conductive material may include a carbon-based material such as at least one of natural graphite, artificial graphite, carbon black, acetylene black, Ketjen black, a carbon fiber, a carbon nanofiber, and carbon nanotube; a metal-based material including at least one of copper, nickel, aluminum, silver, and the like, in the form of a metal powder or a metal fiber; a conductive polymer such as a polyphenylene derivative; or a mixture thereof.

For example, the negative electrode active material layer AML2 may include about 90 wt% to about 99 wt% of the negative electrode active material, about 0.5 wt% to about 5 wt% of the negative electrode binder, and about 0 wt% to about 5 wt% of the conductive material.

The conductive material, the binder, and the negative electrode active material may be provided in a weight ratio of 1:a:b, where a may range from about 1 to about 3, and b may range from about 90 to about 99.

## Negative Electrode Active Material

The negative electrode active material in the negative electrode active material layer AML2 may include at least one of a material that reversibly intercalates/deintercalates lithium ions, a lithium metal, a lithium metal alloy, a material capable of doping/de-doping lithium, or a transition metal oxide.

The material that reversibly intercalates/deintercalates lithium ions may include a carbon-based negative electrode active material, for example, crystalline carbon, amorphous carbon, or a combination thereof. Examples of the crystalline carbon may be graphite such as irregular, planar, flaky, spherical, or fibrous natural graphite or artificial graphite, and examples of the amorphous carbon may be or include at least one of soft carbon, hard carbon, mesophase pitch carbide, fired cokes, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may be or include at least one of silicon, a silicon-carbon composite, $SiOx$ ($0 < x < 2$), a Si-Q alloy (where Q is or includes at least one of an alkali metal, an alkaline earth metal, a Group 13 element, a Group 14 element (except for Si), a Group 15 element, a Group 16 element, a transition metal, a rare-earth element, and a combination thereof), or a combination thereof. The Sn-based negative electrode active material may be or include at least one of Sn, $SnO_2$, a Sn-based alloy, or a combination thereof.

The silicon-carbon composite may be or include a composite of silicon and amorphous carbon. According to an example embodiment, the silicon-carbon composite may be in the form of silicon particles and amorphous carbon coated on the surface of the silicon particles. For example, the silicon-carbon composite may include a secondary particle (core), in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

## Separator 30

Depending on the type of the rechargeable lithium battery, the separator 30 may be present between the positive electrode 10 and the negative electrode 20. The separator 30 may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof on one surface, or on both surfaces, of the porous substrate.

The porous substrate may be or include a polymer film formed of or including any one polymer such as or including at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked together.

## Electrolyte Solution ELL

The electrolyte solution ELL for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, propylene propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (where R is a C2 to C20 linear, branched, or cyclic hydrocarbon group and may include a double bond, an aromatic ring, or an ether group); amides such as dimethylformamide; dioxolanes such as 1,3-dioxolane, 1,4-dioxolane; sulfolanes, and the like.

The non-aqueous organic solvents may be used alone, or in combination of two or more solvents.

In addition, when using a carbonate-based solvent, a cyclic carbonate and a chain carbonate may be mixed, and the cyclic carbonate and the chain carbonate may be mixed in a volume ratio in a range of from about 1:1 to about 1:9.

The lithium salt dissolved in the organic solvent is configured to supply lithium ions in a battery, to enable an operation of a rechargeable lithium battery, and to improve transportation of the lithium ions between positive and negative electrodes. Typical examples of the lithium salt may include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y are integers in a range of 1 to 20), lithium trifluoromethane sulfonate, lithium tetrafluoroethanesulfonate, lithium difluoro(oxalato)borate(LiDFOB), lithium difluorobis(oxalato)phosphate (LiDFBOP), and lithium bis(oxalato) borate (LiBOB).

## Rechargeable Lithium Battery

The rechargeable lithium battery may be classified into cylindrical, prismatic, pouch, or coin-type batteries, and the like depending on their shape. FIGS. 2 to 5 are schematic views showing a rechargeable lithium battery according to example embodiments of the present disclosure, and FIG. 2 shows a cylindrical battery, FIG. 3 shows a prismatic battery, and FIGS. 4 and 5 show pouch-type batteries. Referring to FIGS. 2 to 4, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In addition, in FIG. 3, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIGS. 4 and 5, the rechargeable lithium battery 100 may include an electrode tab 70 illustrated in FIG. 5, or, for example, a positive electrode tab 71 and a negative electrode tab 72 illustrated in FIG. 4, the electrode tabs 70/71/72

forming a conductive path for inducing the current formed in the electrode assembly 40 to the outside of the battery 100.

The rechargeable lithium battery according to an example embodiment of the present disclosure may be applicable to, e.g., automobiles, mobile phones, and/or various types of electric devices, as non-limiting examples.

Hereinafter, the positive electrode according to example embodiments of the present disclosure is described in detail. FIG. 6 is a cross-sectional view showing a positive electrode (positive electrode plate) 10 according to example embodiments of the present disclosure.

The binder included in the positive electrode active material layer AML1 may include an acrylic binder and a polyimide binder.

Polyimide exhibits desired or improved adhesive properties and provide stability at high temperatures, and may thus be used as a binder for a positive electrode of a rechargeable lithium battery requiring high-temperature stability. However, polyimide typically has rigid mechanical properties, and undergoes a dehydration reaction when polyamic acid, which is a polyimide precursor compound, is converted into polyimide, turning into a shrunken polyimide, which causes bending in the positive electrode.

In general, the positive electrode is manufactured by dispersing a binder, a positive electrode active material, and a conductive material in an organic solvent to prepare a positive electrode active material slurry, applying the positive electrode active material slurry onto a current collector to form a positive electrode active material layer, and drying the positive electrode active material layer.

In this case, during the drying process, the polyimide precursor compound (polyamic acid) used as the binder undergoes a dehydration reaction, releasing water molecules and consequently turning inti polyimide. The dehydration reaction caused by the release of water molecules creates voids, resulting in a corresponding shrinkage of the polyimide. The shrinkage of the polyimide also induces shrinkage in the positive electrode active material layer and a difference in volume shrinkage between an interface where the positive electrode active material layer and the current collector are in contact and a surface of the positive electrode active material layer results in bending of the positive electrode.

In this case, a coating process is not applicable to the back of the positive electrode, thereby failing double-sided coating. This, in turn, results in a relative reduction in the amount of positive electrode active material used, leading to reductions in both press density and cell energy density in the positive electrode. In addition, forcing the bent portion of the positive electrode flat so as to enable double-sided coating may result in the formation of cracks on the positive electrode surface, which may degrade the electrochemical properties of an electrode. In addition, applying only a small amount of positive electrode active material slurry to one side of the current collector to mitigate positive electrode bending may result in a substantial decrease in battery capacity.

To solve these limitations, the present disclosure uses a highly flexible acrylic binder blended with the polyimide binder as a positive electrode binder.

The positive electrode active material slurry according to example embodiments of the present disclosure, by virtue of the acrylic binder physically compensating for the volume shrinkage resulting from water release during the dehydration reaction of the polyimide precursor compound, may hinder or prevent the positive electrode 10 from bending and enhance adhesive strength at the interface between the positive electrode active material layer and the current collector. In addition, examples of the present disclosure may enhance the lifespan characteristics of a rechargeable lithium battery by using an aromatic polyimide exhibiting high oxidation resistance as the polyimide binder. Therefore, when the polyimide binder and the acrylic binder are mixed and used as a positive electrode binder, a rechargeable lithium battery exhibiting effectively enhanced lifespan characteristics may be provided.

For example, the acrylic binder in the positive electrode active material layer AML1 may amount to about 0.1 wt% to about 5 wt%. The polyimide binder in the positive electrode active material layer AML1 may amount to about 0.1 wt% to about 5 wt%. A weight ratio of the acrylic binder and the polyimide binder in the positive electrode active material layer AML1 may be in a range of from about 1:9 to about 4:6.

When the amount of the acrylic binder is less than about 0.2 wt%, reducing or preventing a positive electrode plate from bending during the manufacture of the positive electrode plate is challenging to achieve, and when the amount of the acrylic binder is greater than about 10 wt%, the proportion of the polyimide in the positive electrode plate may decrease, thereby failing to control the severe volume change of the positive electrode active material resulting from repeated charging and discharging. Therefore, when the amount of acrylic binder and the polyimide binder satisfy the above range, the positive electrode 10 may have improved press density, and thus rechargeable lithium batteries may have improved cell lifespan characteristics.

## Acrylic Binder

The acrylic binder may be or include a copolymer containing a styrene unit and an acrylate unit. For example, the copolymer may include a styrene monomer or a repeating unit derived from a styrene monomer, and an acrylate monomer or a repeating unit derived from an acrylate monomer. The copolymer may be or include a random copolymer, an alternating copolymer, or a block copolymer.

The copolymer may exhibit high flexibility provided by the inclusion of the acrylate unit, and may thus exhibit desired or improved adhesive properties between substrates. Accordingly, the adhesive strength between the positive electrode active material layer AML1 and the positive electrode current collector COL1 may be improved, and the press density of the positive electrode 10 may be improved.

For example, a molar ratio of the styrene unit and the acrylate unit in the copolymer may be about 25:75 to about 70:30. For example, the molar ratio may be about 25:75 to about 40:60. When the above range is satisfied, the positive electrode 10 may have improved press density, and thus rechargeable lithium batteries may have improved cell lifespan characteristics.

In an example embodiment, the copolymer may include a repeating unit derived from a styrene monomer represented by Formula 2 below.

Formula 2:

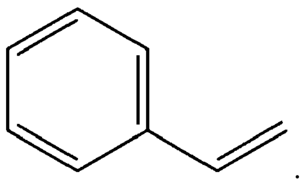

The acrylate monomer may be or include at least one of, for example, methyl acrylate, ethyl acrylate, n-propyl acrylate, isopropyl acrylate, n-butyl acrylate, isobutyl acrylate, tert-butyl acrylate, n-pentyl acrylate, n-hexyl acrylate, n-heptyl acrylate, n-octyl acrylate, 2-ethylhexyl acrylate, n-nonyl acrylate, n-decyl acrylate, isodecyl acrylate, lauryl acrylate, stearyl acrylate, and a methacrylate-based compound of these compounds, where a substituent attached to an acrylic group is an alkyl group; for example, 2-methoxyethyl acrylate, 2-ethoxyethyl acrylate, 2-methoxyethoxyethyl acrylate, 2-ethoxyethoxyethyl acrylate, 2-acetoxyethyl acrylate, 2-acetoxyethoxyethyl acrylate, and a methacrylate-based compound of these compounds, where a substituent attached to an acrylic group is an alkoxy group; for example, 1-hydroxymethyl acrylate, 2-hydroxyethyl acrylate, 3-hydroxypropyl acrylate, 2-hydroxyethoxyethyl acrylate, acrylic acid, 1-carboxylmethyl acrylate, 2-carboxylethyl acrylate, 3-carboxylpropyl acrylate, acrylamide, N,N-dimethyl acrylamide, N-methylol acrylamide, N-butoxymethyl acrylamide, 1-aminomethyl acrylate, 2-aminomethyl acrylate, 3-aminopropyl acrylate, acrylonitrile, and a methacrylate-based compounds of these compounds, where a substituent attached to an acrylic group has a hydroxyl group, a carboxyl group, an amide group, an amine group, or a nitrile group at a terminal.

In an example embodiment, the acrylate monomer may be or include 2-ethylhexyl acrylate represented by Formula 3 below.

Formula 3:

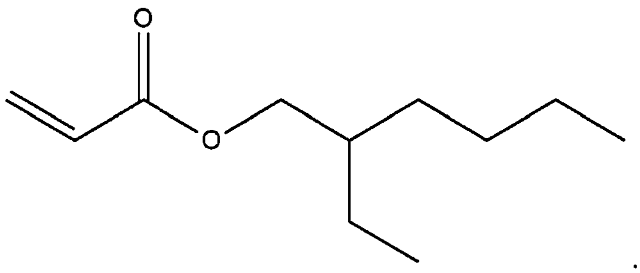

In an example embodiment, the copolymer may further include a repeating unit derived from an acrylic acid monomer represented by Formula 4 below.

Formula 4:

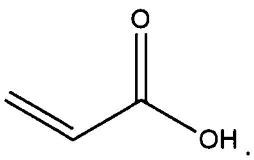

In an example embodiment, the copolymer may be or include poly[styrene-co-(2-ethylhexyl acrylate)] obtained by polymerizing a styrene monomer and 2-ethylhexyl acrylate.

In an example embodiment, the copolymer may be or include poly[styrene-co-(2-ethylhexyl acrylate)-co-acrylic acid] obtained by polymerizing a styrene monomer, 2-ethylhexyl acrylate, and acrylic acid.

The copolymer may be prepared using radical polymerization, reversible addition-fragmentation chain transfer (RAFT) polymerization, or atom transfer radical polymerization (ATRP) polymerization. For example, the copolymer may be prepared through radical polymerization using N-methyl-2-pyrrolidone (NMP) as a solvent.

**Polyimide Binder**

The polyimide binder may include, for example, an aromatic polyimide. The aromatic polyimide indicates a polymer in which aromatic compounds are directly linked through imide bonds. The aromatic polyimide has rigid and robust molecular structures due to a conjugated structure formed by aromatic groups linked through imide bonds, and also has substantially high levels of thermal, mechanical, and chemical properties due to strong intermolecular forces of the imide bonds. The desired or improved oxidation resistance of the aromatic polyimide may enable a rechargeable lithium battery including the aromatic polyimide to have improved lifespan characteristics.

The aromatic polyimide may be synthesized by polymerizing dianhydride and diamine. With the dianhydride and the diamine, polyamic acid (PAA), which is a precursor for polyimide formation, may be synthesized. As the dianhydride, for example, 3,3',4,4'-benzophenone tetracarboxylic dianhydride (BTDA), pyromellitic dianhydride (PMDA), or 3,3',4,4'-diphenylsulfone tetracarboxylic dianhydride (DSDA) may be used. As the diamine, for example, 3,3'-diaminodiphenyl sulfone (3,3'-$DDSO_2$), 4,4'-diaminodiphenyl sulfone (4,4'-$DDSO_2$), 4,4'-methylene dianiline (4,4'-MDA), 4,4'-oxydianiline (4,4'-ODA), or 1,4-phenylenediamine (p-PDA) may be used.

As an example, the polyimide binder may include a compound represented by Formula 5 or Formula 6 below.

Formula 5:

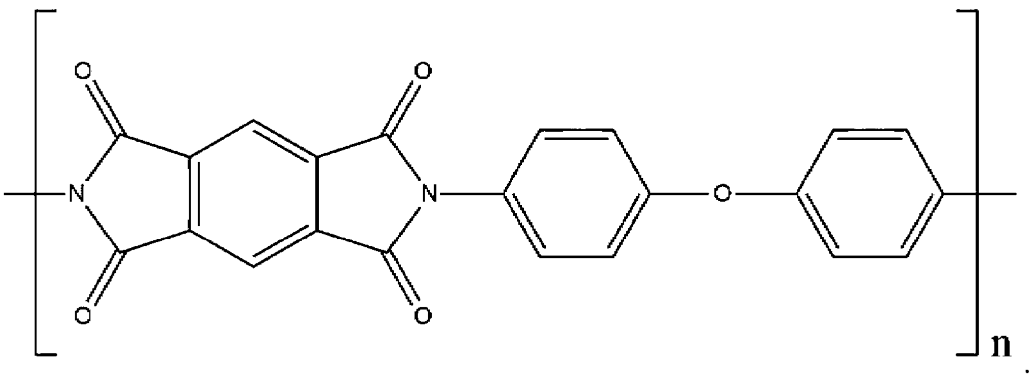

Formula 6:

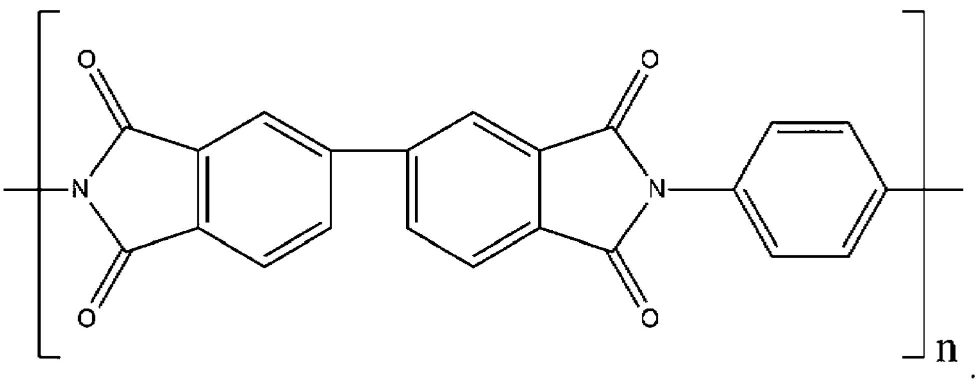

Hereinafter, the present disclosure is described in more detail through Examples and Comparative Examples. However, Examples are only illustrations for describing the present disclosure, and the scope of the present disclosure is not limited to Examples below.

**Example 1**

An acrylic binder and a polyimide binder for a positive electrode were prepared. The acrylic binder is a copolymer

containing a styrene unit and an acrylate unit, and the polyimide binder includes an aromatic polyimide.

The copolymer may be synthesized through the following process. In a flask, a styrene monomer, an acrylate monomer, and other monomers (water-soluble monomers) as needed may be mixed, and the mixture may be stirred in an aqueous solution or organic solvent containing sodium hydroxide and/or ammonia as needed. The atmosphere in the flask may be replaced with nitrogen, and the mixture may be heated to a temperature of 60 °C. When the temperature of the mixture reaches 60 °C, a reaction initiator may be added to initiate polymerization. The mixture may be stirred and polymerized to synthesize the copolymer. For example, in the following step, the copolymer may be used in a solution state.

For example, as the reaction initiator an azo compound such as 2,2'-azobis(2-methyl-N-2-hydroxyethylpropionamide) or 2,2'-azobis[N-(2-carboxyethyl)-2-methylpropionamidine]tetrahydrate; or a persulfate such as ammonium persulfate or potassium persulfate may be used.

The synthesized acrylic binder may be obtained by removing a solvent such as water, but an aqueous dispersion of the acrylic binder may also be used as is. For example, the acrylic binder and the polyimide binder were prepared through the following method.

## Preparation Example 1: Synthesis of Copolymer

Styrene and 2-ethylhexyl acrylate as monomers, N-methyl-2-pyrrolidone (NMP) as a solvent, and 2,2'-azobis(2-methyl-N-2-hydroxyethylpropionamide) as an initiator were placed in a flask and polymerized at 85 °C for 4 hours or greater. The styrene amounted to about 25 wt% and the 2-ethylhexyl acrylate amounted to about 75 wt%, with respect to a total weight of the monomers. Thereafter, a reaction solution was concentrated by heating and distillation under reduced pressure to remove unreacted monomers, and ammonia water and ionexchange water were added to adjust the solid content of the copolymer solution to 5 wt% and the pH to 7.5, thereby obtaining a poly[styrene-co-(2-ethylhexyl acrylate)] copolymer. The obtained copolymer had a weight average molecular weight of 900,000 and a molecular weight distribution of 3.1. In addition, the obtained 5 wt% copolymer solution has a viscosity of 4200 mPa·s, as measured by a B-type viscometer (25 °C, 30 rpm). There was almost no unreacted monomer removed, and thus the content of the raw material used was used as the content of each monomer-derived unit in the copolymer.

## Preparation Example 2: Synthesis of Aromatic Polyimide

1,4-phenylenediamine (p-PDA) was mixed in N,N-dimethylacetamide (DMAc) under a nitrogen atmosphere for 1 hour, and an equimolar amount of pyromellitic dianhydride (PMDA) was added to induce a reaction for 24 hours to form polyamic acid. The reaction was performed at room temperature. Once a highly viscous yellow solution formed, N,N-dimethylacetamide (DMAc) was added to dilute the solution to about 30 wt%, and then the diluted solution was added dropwise to toluene with vigorous stirring to precipitate polyamic acid. Thereafter, the obtained thread-like material was filtered, washed with toluene, and dried in a vacuum oven at 60 °C for 24 hours. The remaining solvent and byproducts were removed through gradual heating from 100 to 200 °C, and then the resulting product was heat treated 250 to 300 °C to convert the amide bonds to imide bonds, thereby obtaining a compound represented by Formula 5 below.

Formula 5:

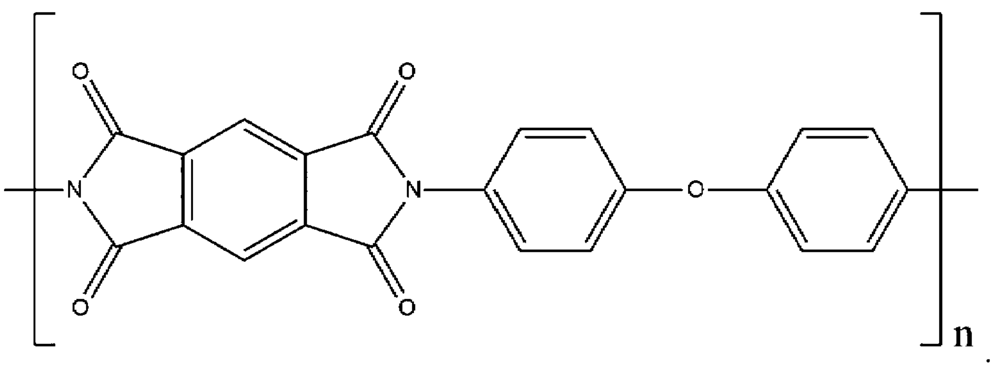

## Manufacturing of Positive Electrode

Lithium nickel cobalt aluminum oxide ($LiNiCoAlO_2$, NCA) as a positive electrode active material, poly[styrene-co-(2-ethylhexyl acrylate)] as an acrylic binder, the compound represented by Formula 5 above as a polyimide binder, and

Ketjen black as a conductive material were mixed in a weight ratio of 91:4:4:1 and dispersed in N-methyl-2-pyrrolidone (NMP) as a solvent using a PD mixer to prepare a positive electrode active material slurry.

The prepared positive electrode active material slurry was applied onto one side of an aluminum current collector having a thickness of 10 μm using a reverse roll coater to achieve a loading level (L/L) of 30mg/cm$^2$ to 60 mg/cm$^2$ and then dried at 110 °C. The slurry was pressed using a roll press to prepare a positive electrode.

**Manufacturing of Negative Electrode**

A mixture of artificial graphite and silicon nanoparticles in a weight ratio of 93:7 as a negative electrode active material, styrene-butadiene rubber (SBR) as a binder, and carboxymethyl cellulose (CMC) as a thickener were mixed in a weight ratio of 97:1:2 and dispersed in distilled water to prepare a negative electrode active material slurry.

The negative electrode active material slurry was applied onto a 10 μm thick copper current collector, dried at 100 °C, and then pressed using a roll press to prepare a negative electrode.

**Manufacturing of Rechargeable Lithium Battery**

The positive and negative electrodes were cut into squares of 29 mm × 29 mm and 27 mm × 27 mm, respectively, and nickel and aluminum lead wires were welded, and then a polyethylene porous separator was placed. Nine positive electrode layers and ten negative electrode layers were alternately stacked to prepare an electrode laminate. Thereafter, the electrode laminate was stored in an aluminum laminate film with the lead wires drawn out, and an electrolyte solution was injected and sealed under reduced pressure to manufacture a rechargeable lithium battery. As the electrolyte solution, 1 M $LiPF_6$ and 1 wt% vinylene carbonate were dissolved in a solvent in which ethylene carbonate (EC), ethyl methyl carbonate (EMC), and dimethyl carbonate (DMC) were mixed in a volume ratio of 20:40:40. The injection amount was 1.25 g. The designed capacity of the manufactured battery was 500 mAh.

**Example 2**

A rechargeable lithium battery was manufactured in the same manner as in Example 1, with a difference that styrene, 2-ethylhexyl acrylate, and acrylic acid were used as monomers, and about 25 wt% of the styrene, about 70 wt% of the 2-ethylhexyl acrylate, and about 5 wt% of the acrylic acid were used to synthesize a poly[styrene-co-(2-ethylhexyl acrylate)-co-acrylic acid] copolymer as an acrylic binder.

**Example 3**

A rechargeable lithium battery was manufactured in the same manner as in Example 1, with a difference that about 70 wt% of the styrene and about 30 wt% of the 2-ethylhexyl acrylate were used.

**Comparative Example 1**

A rechargeable lithium battery was manufactured in the same manner as in Example 1, with a difference that an acrylic binder and a polyimide binder were not included, polyvinylidene fluoride (PVdF) was used as a binder, and a positive electrode active material, polyvinylidene fluoride (PVdF), and a conductive material were provided in a weight ratio of 91:8:1.

**Comparative Example 2**

A rechargeable lithium battery was manufactured in the same manner as in Example 1, with a difference only a polyimide binder was used without including an acrylic binder, and a positive electrode active material, a polyimide binder, and a conductive material were provided in a weight ratio of 91:8:1.

**Evaluation Example 1: Evaluation of Bending Strength**

The positive electrodes according to Examples 1 to 3 and Comparative Examples 1 and 2 were evaluated for bending strength. The bending strength was measured through the following method according to ASTM D790. The positive electrode plates prepared according to Examples and Comparative Examples were cut into a size of 15 mm in width and 20 mm in length to prepare specimens. The specimens were placed between first and second points at 10 mm intervals using a three-point bending method, and the center of the specimens (third point) was pressed at a constant rate in a thickness direction with a probe to perform a bending property test. The force applied while moving the third point at a

rate of 5 mm/min in the thickness direction was measured. The measurement results are shown in Table 1 below.

**Evaluation Example 2: Evaluation of Heat Resistance Breakage**

The positive electrode plates according to Examples 1 to 3 and Comparative Examples 1 and 2 were cut into sizes of 50 mm in width and 50 mm in length, and placed in an oven heated to 200 °C, 230 °C, and 250 °C. After 10 minutes, the specimens were taken out of the oven and observed for breakage. When broken, the specimen was marked with "O"; when not broken, the specimen was marked with "X", and the results are shown in Table 1 below.

**Evaluation Example 3: Evaluation of Adhesive Strength**

The positive electrode plates according to Examples 1 to 3 and Comparative Examples 1 and 2 were cut to a size of 25 mm in width and 100 mm in length. A sample for evaluating the positive electrode adhesive strength was prepared by attaching a positive electrode active material layer side to a glass substrate using an adhesive tape (Celotape® No. 405 from Nichiban Co., Ltd.) as an adhesion surface. The sample was mounted on a peel tester (Instron 3400 series), and stress was measured when a current collector was peeled off at a rate of 300 mm/min at a 180° angle. The measurement was performed five times, and an average value was calculated as the peel strength. The adhesive strength (i.e., peel strength) was calculated according to Equation 1 below, and the results are shown in Table 1 below.

Adhesion strength (gf/mm) = measured force (gf) / length of adhesive area (mm). Equation 1:

**Evaluation Example 4: Evaluation of Press Density**

The positive electrode plates according to Examples 1 to 3 and Comparative Examples 1 and 2 were cut into a size of 25 mm in width and 25 mm in length to prepare specimens, and press density was measured at a force of 2,000 kgf using a press density measuring device (HPRM-1000, Hantech, Korea). The results are shown in Table 1 below.

Table 1:

| | Bending strength (N) | Breakage | Adhesive strength (gf/mm) | Press density (g/cc) |
|---|---|---|---|---|
| Example 1 | 0.8 | X | 2.0 | 3.7 |
| Example 2 | 0.9 | X | 3.0 | 3.7 |
| Example 3 | 1.1 | X | 2.0 | 3.7 |
| Comparative Example 1 | 0.8 | X | 1.3 | 3.7 |
| Comparative Example 2 | 2.0 | O | 20.0 | 3.3 |

**Evaluation Example 5: Evaluation of Interfacial Resistance**

The positive electrode plates according to Examples 1 to 3 and Comparative Examples 1 and 2 were measured for interfacial resistance at 25 °C using an electrode resistance measurement system (Hioki, RM2610). In the electrode resistance measurement system (Hioki, RM2610), a probe was placed on the positive electrode, such that the positive electrode active material layer of the positive electrode faced the probe, a constant current was passed through a surface of the positive electrode active material layer, and interfacial resistance between the positive electrode active material layer and the positive electrode current collector was measured. The results are shown in Table 2 below.

Table 2:

| | Interfacial resistance ($\Omega cm^{2}$) |
|---|---|
| Example 1 | 0.05 |
| Example 2 | 0.02 |
| Example 3 | 0.03 |
| Comparative Example 1 | 0.1 |
| Comparative Example 2 | 0.2 |

**Evaluation Example 6: Evaluation of Lifespan Characteristics of Rechargeable Lithium Batteries**

The rechargeable lithium batteries manufactured according to Examples 1 to 3 and Comparative Examples 1 and 2 were subjected to 100 chargedischarge cycles under the conditions of 'charge at 25 °C and 1.0 C (CC/CV, 4.5V 0.02C cut-off) / discharge at 1.0 C (CC, 3.0 V cut-off)', and then lifespan retention was determined. Lifespan retention was calculated according to Equation 2 below. The results are shown in Table 3 below.

Lifespan retention (%)=(discharge capacity after 100 cycles/initial discharge capacity) * 100.    Equation 2:

Table 3:

| | Lifespan retention at 100 cycles (%) |
|---|---|
| Example 1 | 90 |
| Example 2 | 85 |
| Example 3 | 82 |
| Comparative Example 1 | 85 |
| Comparative Example 2 | 87 |

**Comprehensive Evaluation**

Referring to Table 1 and Table 2 above, it is seen that the positive electrodes according to the concept of the present disclosure (Examples 1 to 3) are superior to the positive electrodes of Comparative Examples in bending strength, adhesive strength, press density, and interfacial resistance.

Referring to Table 3 above, it is seen that the rechargeable lithium batteries according to the concept of the present disclosure (Examples 1 to 3) exhibit greater lifespan characteristics at room temperature than the rechargeable lithium batteries of Comparative Examples.

A positive electrode for a rechargeable lithium battery according to an example embodiment may exhibit improved press density and enhanced adhesive strength between a positive electrode active material layer and a positive electrode current collector.

A rechargeable lithium battery according to an example embodiment may exhibit improved lifespan characteristics.

Although the example embodiments of the present disclosure have been described above with reference to the accompanying drawings, the present disclosure may be applied in other specific forms without changing the technical idea or essential features thereof. Therefore, the above-described example embodiments are to be considered in all aspects as illustrative and not restrictive.

**Claims**

**1.** A positive electrode for a rechargeable lithium battery, the positive electrode comprising a positive electrode active material layer,

wherein the positive electrode active material layer includes:

a positive electrode active material;
a conductive material;
an acrylic binder; and
a polyimide binder, and

the acrylic binder comprises a copolymer containing a styrene unit and an acrylate unit.

**2.** The positive electrode for a rechargeable lithium battery of claim 1, wherein the polyimide binder comprises an aromatic polyimide.

**3.** The positive electrode for a rechargeable lithium battery of claim 1 or 2, wherein the copolymer comprises poly [styrene-co-(2-ethylhexyl acrylate)].

**4.** The positive electrode for a rechargeable lithium battery of claim 1 or 2, wherein the copolymer comprises poly [styrene-co-(2-ethylhexyl acrylate)-co-acrylic acid].

**5.** The positive electrode for a rechargeable lithium battery of any one of claims 1 to 4, wherein a weight ratio of the acrylic binder to the polyimide binder in the positive electrode active material layer is in a range of from about 1:9 to about 4:6.

**6.** The positive electrode for a rechargeable lithium battery of any one of claims 1 to 5, wherein a molar ratio of the styrene unit to the acrylate unit in the copolymer is in a range of from about 25:75 to about 70:30.

**7.** The positive electrode for a rechargeable lithium battery of any one of claims 1 to 6, wherein the positive electrode active material layer contains about 90 wt% to about 99 wt% of the positive electrode active material.

**8.** The positive electrode for a rechargeable lithium battery of any one of claims 1 to 7, wherein the positive electrode active material layer contains about 0.1 wt% to about 5 wt% of the conductive material.

**9.** The positive electrode for a rechargeable lithium battery of any one of claims 1 to 8, wherein the positive electrode active material layer contains about 0.1 wt% to about 5 wt% of the acrylic binder.

**10.** The positive electrode for a rechargeable lithium battery of any one of claims 1 to 9, wherein the positive electrode active material layer contains about 0.1 wt% to about 5 wt% of the polyimide binder.

**11.** The positive electrode for a rechargeable lithium battery of any one of claims 1 to 10, wherein the positive electrode active material comprises a lithium composite oxide represented by Formula 1:

Formula 1: $Li_xM^1{}_yM^2{}_zM^3{}_{1-y-z}O_{2-a}X_a$

x, a, y, and z satisfy $0.5 \leq x \leq 1.8$, $0 \leq a \leq 0.05$, $0 < y \leq 1$, $0 \leq z \leq 1$, and $0 < y+z \leq 1$,
$M^1$, $M^2$, and $M^3$ each independently include at least one of nickel (Ni), cobalt (Co), manganese (Mn), aluminum (Al), boron (B), barium (Ba), calcium (Ca), cerium (Ce), chromium (Cr), iron (Fe), molybdenum (Mo), niobium (Nb), silicon (Si), strontium (Sr), magnesium (Mg), titanium (Ti), vanadium (V), tungsten (W), zirconium (Zr), or lanthanum (La), and a combination thereof, and
X includes at least one of fluorine (F), sulfur (S), phosphorus (P), or chlorine (Cl).

**12.** The positive electrode for a rechargeable lithium battery of claim 11, wherein the positive electrode active material comprises an NCA-based positive electrode active material comprising at least one of Ni, Co, and Al.

**13.** A rechargeable lithium battery comprising:

the positive electrode according to any one of claims 1 to 12;
a negative electrode including a negative electrode active material; and
an electrolyte solution.

**14.** The rechargeable lithium battery of claim 13, wherein the negative electrode active material comprises at least one of a carbon-based negative electrode active material, a Si-based negative electrode active material, a Sn-based negative electrode active material, and a combination thereof.

**15.** The rechargeable lithium battery of claim 13 or 14, having a lifespan retention in a range of from about 85% or greater.

FIG. 1

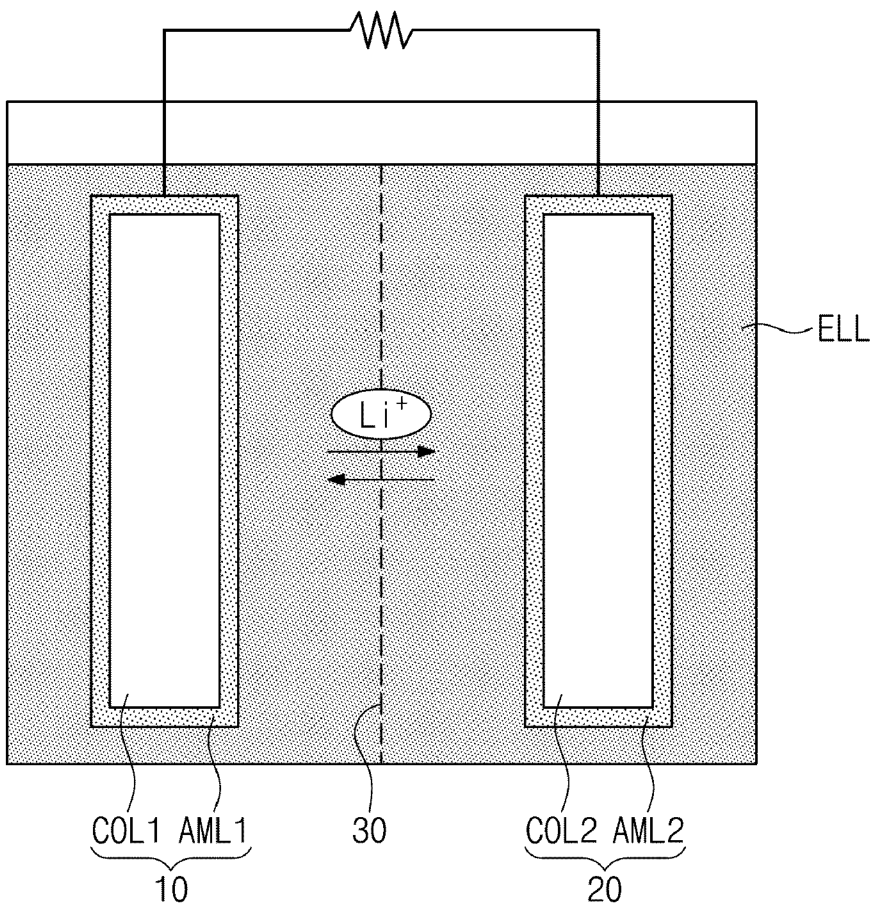

FIG. 2

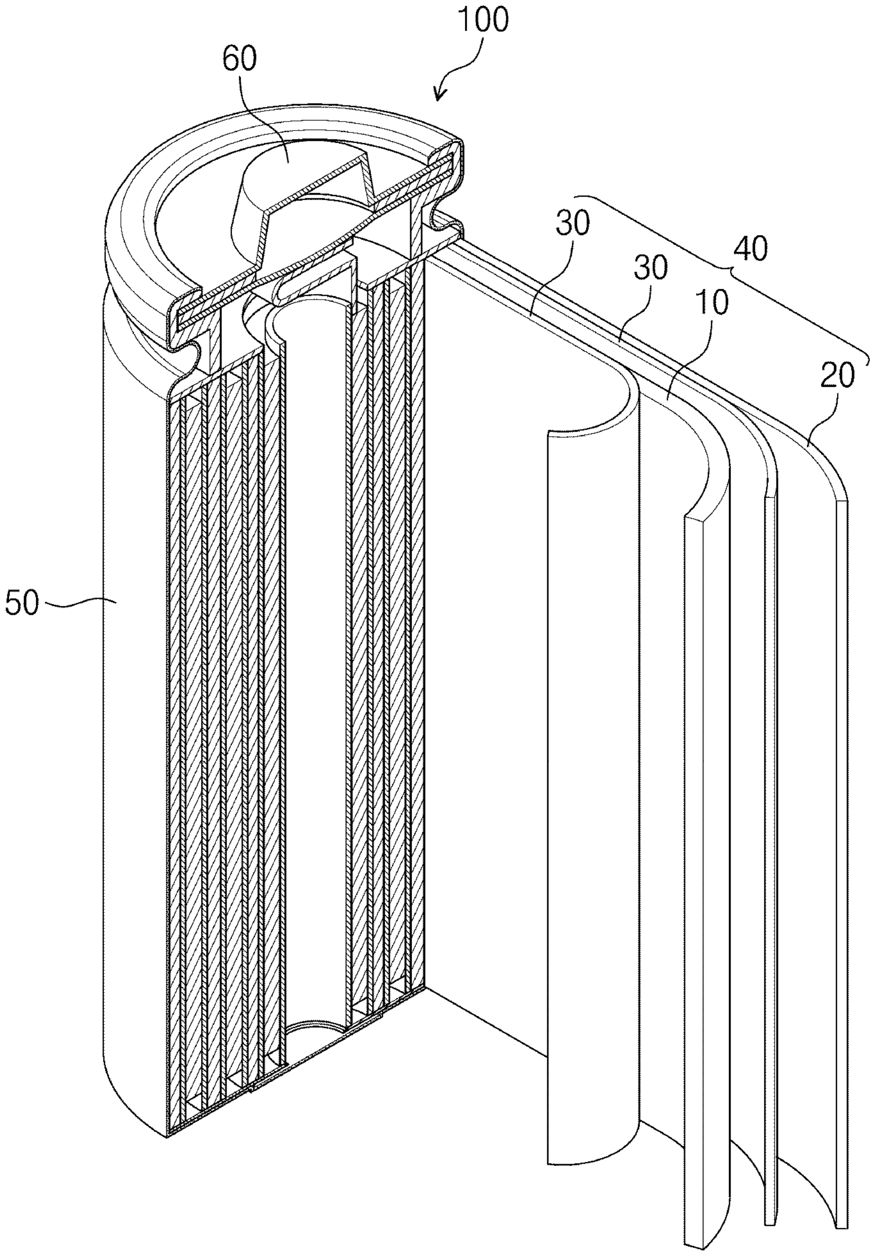

FIG. 3

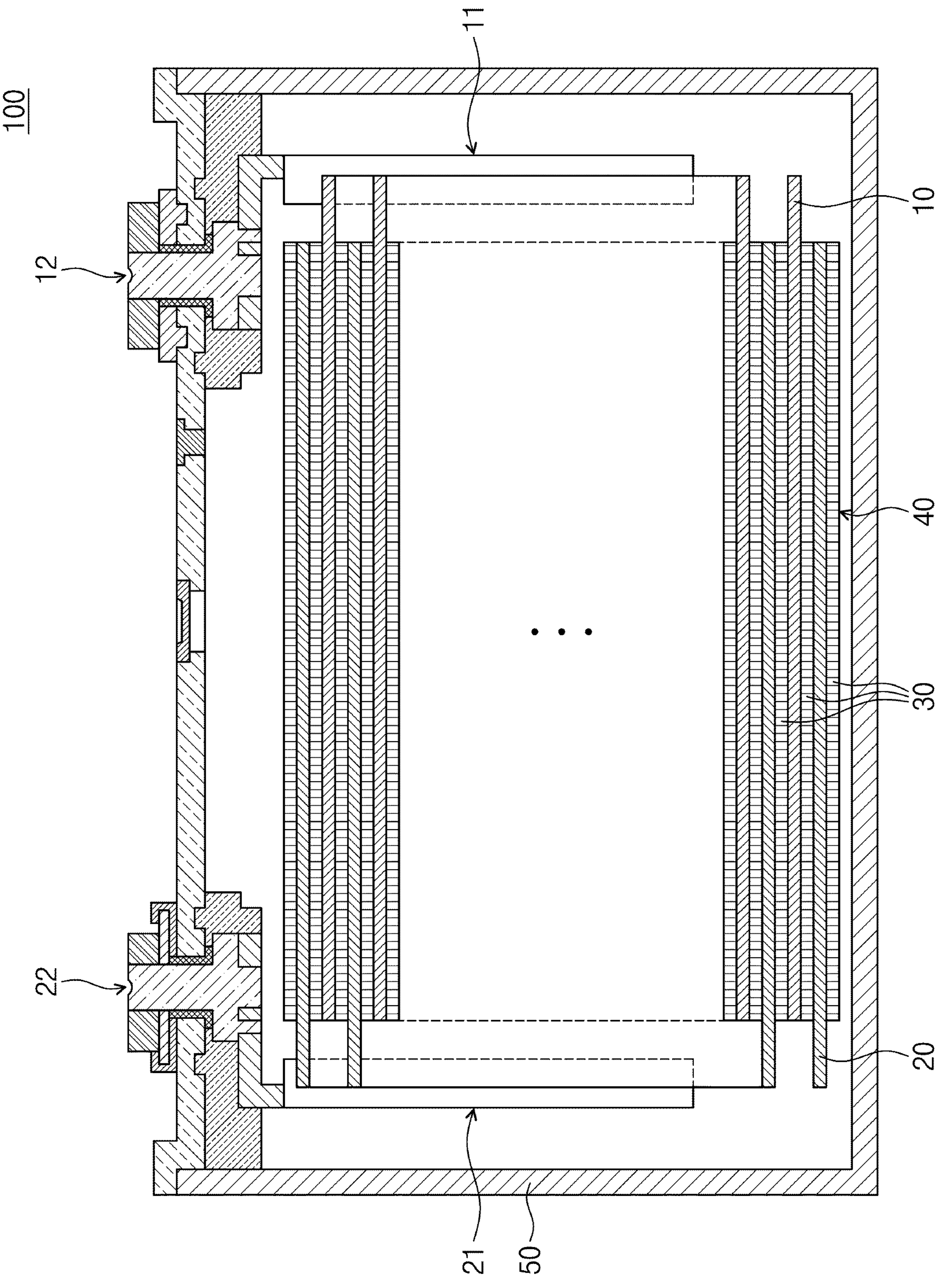

FIG. 4

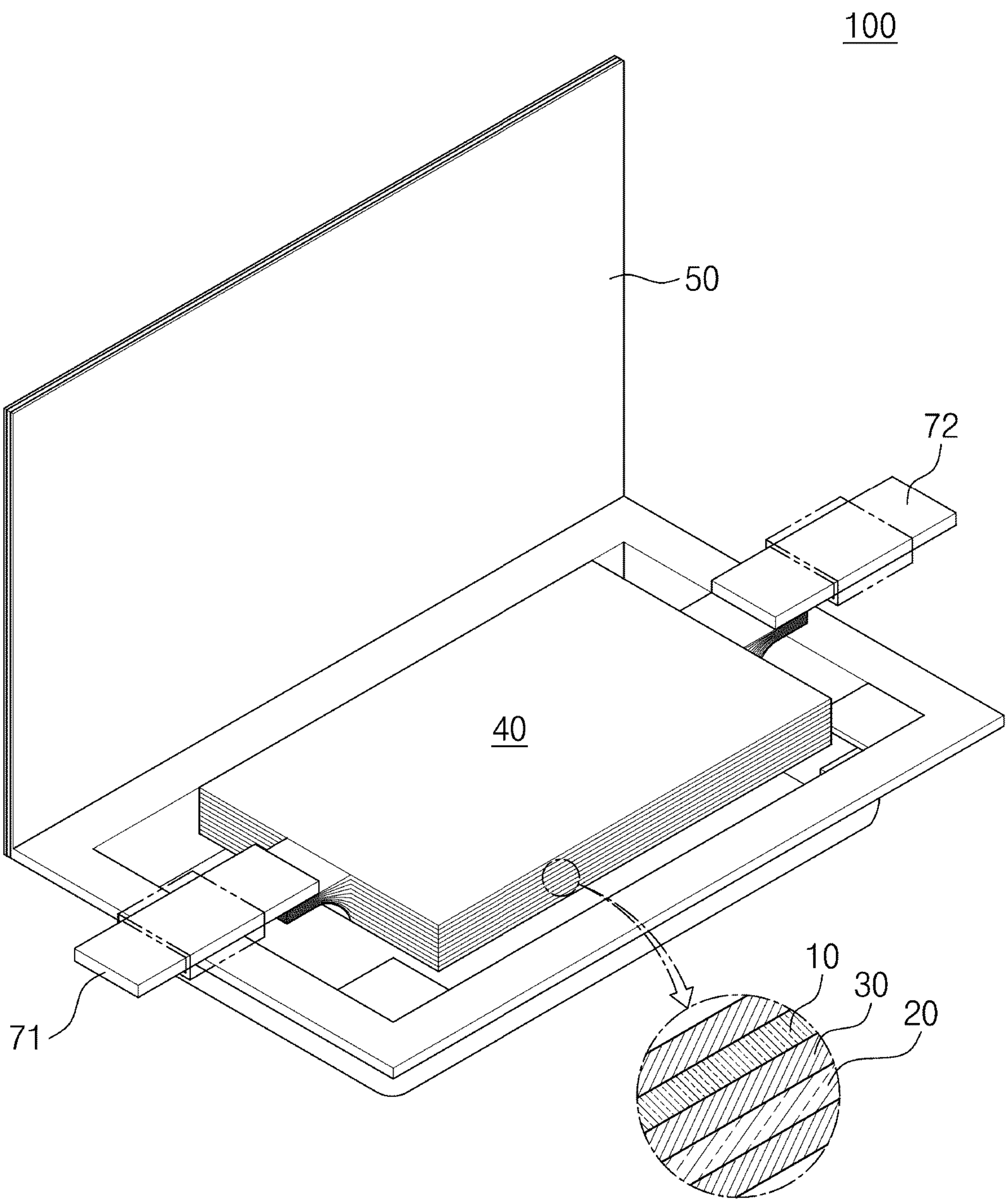

FIG. 5

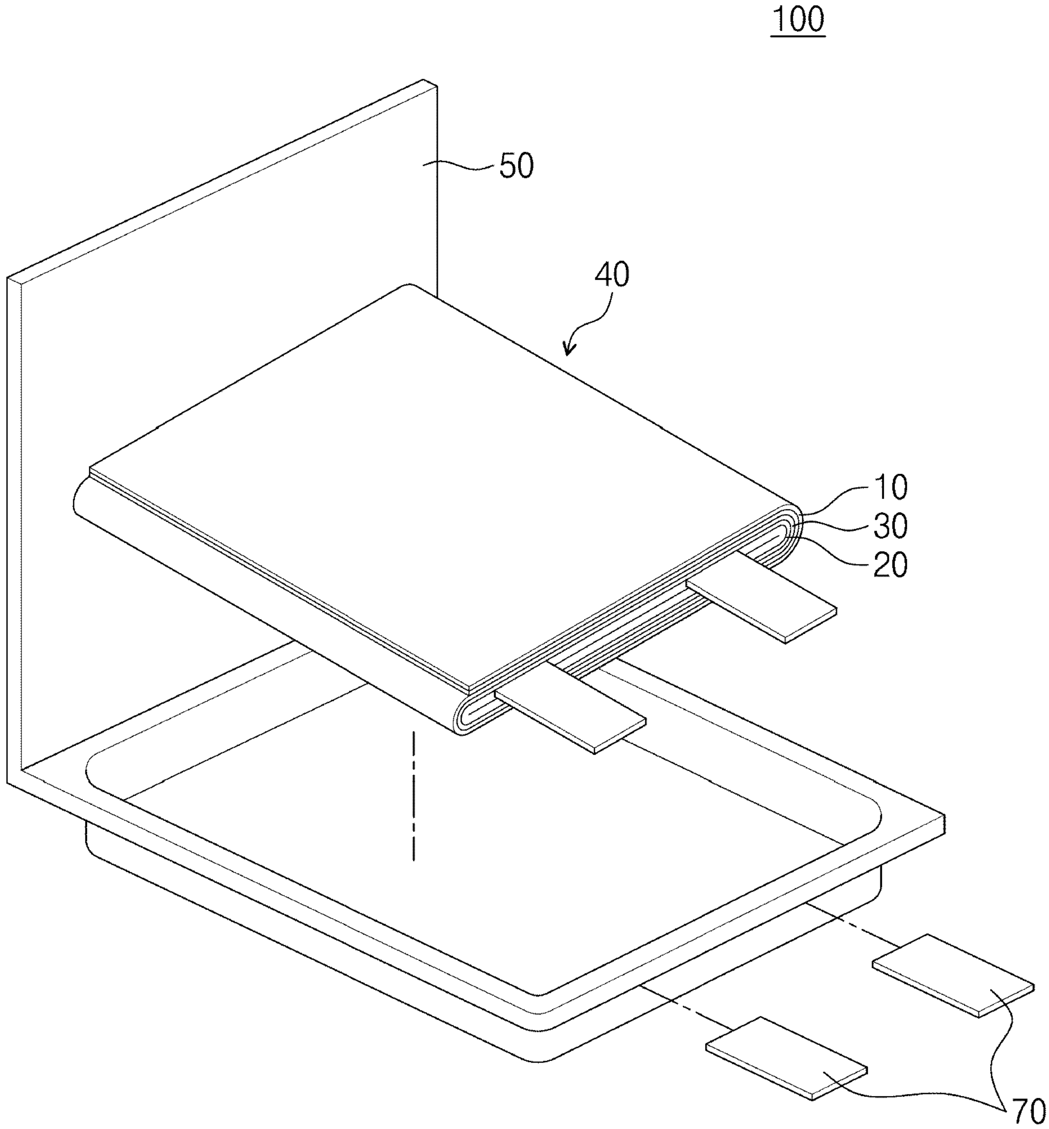

FIG. 6

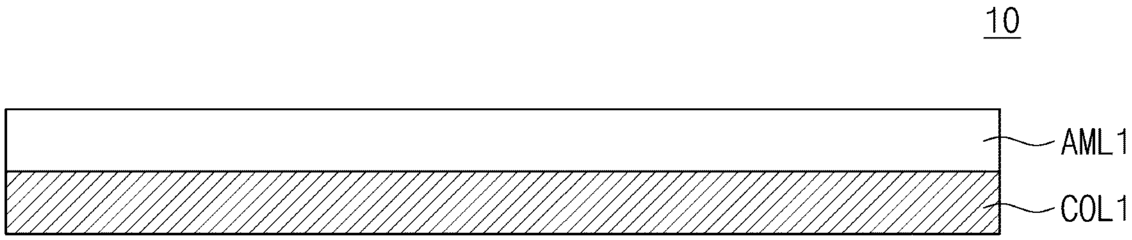
10
AML1
COL1

FIG. 7

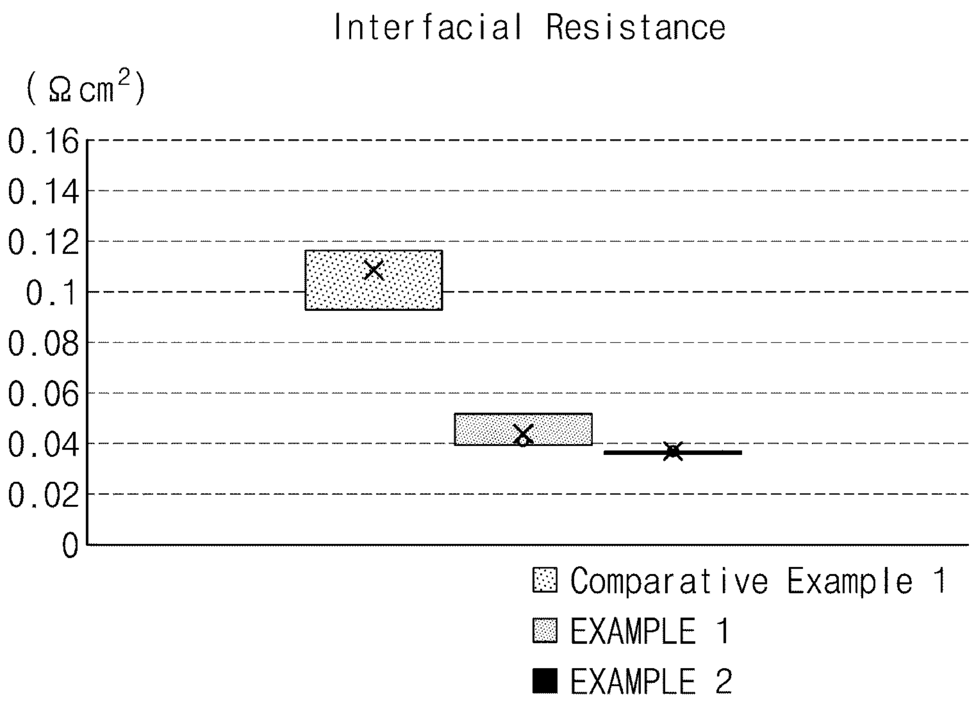
Interfacial Resistance
(Ωcm2)
0.16
0.14
0.12
0.1
0.08
0.06
0.04
0.02
0
Comparative Example 1
EXAMPLE 1
EXAMPLE 2

FIG. 8

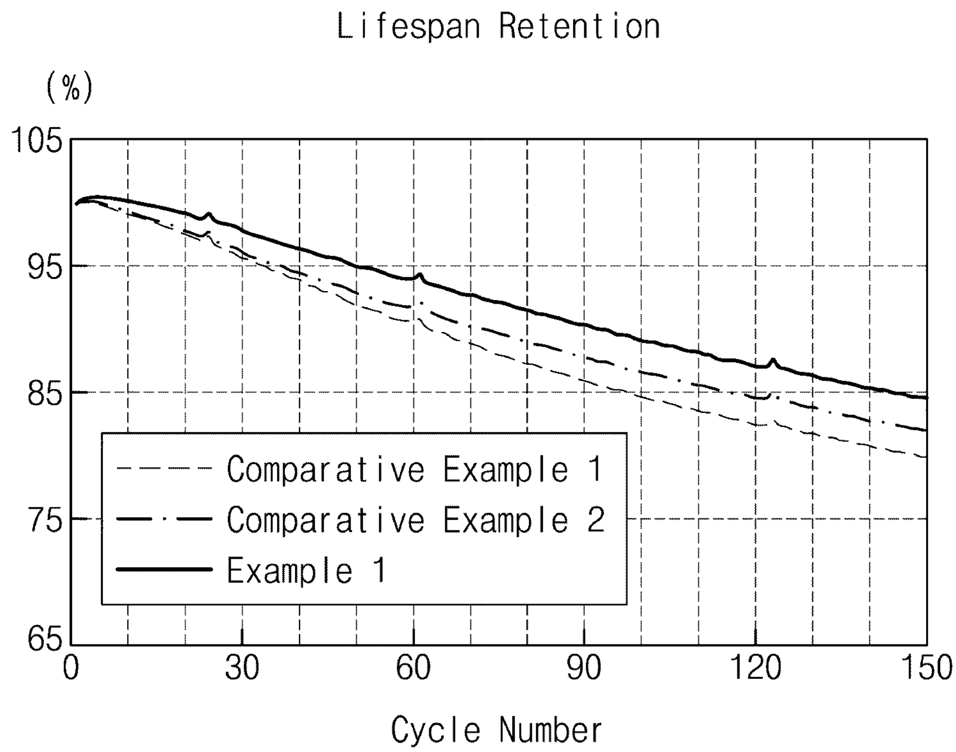
Lifespan Retention
(%)
105
95
85
75
65
0
30
60
90
120
150
Cycle Number
Comparative Example 1
Comparative Example 2
Example 1

Europäisches Patentamt
European Patent Office
Office européen des brevets

# EUROPEAN SEARCH REPORT

Application Number
EP 25 21 5030

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/268512 A1 (HA JIN-SU [KR] ET AL) 24 August 2023 (2023-08-24) * paragraph [0061]; claims 1,11,12; example 1 * ----- | 1-15 | INV. H01M4/04 H01M4/131 H01M4/62 H01M10/0525 |
| A | CN 117 946 319 A (SHENZHEN YANYI NEW MAT CO LTD) 30 April 2024 (2024-04-30) * examples * ----- | 1-15 | |
| | | | TECHNICAL FIELDS SEARCHED (IPC) |
| | | | H01M |

The present search report has been drawn up for all claims

1

| Place of search | Date of completion of the search | Examiner |
|---|---|---|
| Munich | 1 April 2026 | Duval, Monica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 21 5030

This annex lists the patent family members relating to the patent documents cited in the above-mentioned European search report. The members are as contained in the European Patent Office EDP file on
The European Patent Office is in no way liable for these particulars which are merely given for the purpose of information.

01-04-2026

| Patent document cited in search report | Publication date | Patent family member(s) | Publication date |
|---|---|---|---|
| US 2023268512 A1 | 24-08-2023 | KR 20220048837 A | 20-04-2022 |
| | | US 2023268512 A1 | 24-08-2023 |
| | | WO 2022080809 A1 | 21-04-2022 |
| CN 117946319 A | 30-04-2024 | NONE | |

EPO FORM P0459

For more details about this annex : see Official Journal of the European Patent Office, No. 12/82